# EUROPÄISCHE PATENTANMELDUNG

(11) **EP 1 630 036 A2**
(43) Veröffentlichungstag der Anmeldung: **01.03.2006**
(21) Anmeldenummer: 05018552.9
(22) Anmeldetag: 26.08.2005
(51) Int. Cl.: B60N 3/04

(54) **Bodenverkleidung für den Innenraum von Kraftfahrzeugen**

(30) Priorität: 27.08.2004 DE 202004013549 U
(71) Anmelder: Carcoustics Tech Center GmbH, 51381 Leverkusen (DE)
(72) Erfinder: Blömeling, Heinz, 41799 Leichlingen (DE); Abeck, Volkmar, 50825 Köln (DE)
(74) Vertreter: Cohausz & Florack

(57) **Zusammenfassung**

Die Erfindung betrifft eine Bodenverkleidung für den Innenraum von Kraftfahrzeugen mit einer textilen Dekorschicht (10), insbesondere Teppichschicht, und mindestens einem unterhalb der Dekorschicht angeordneten Formteil (1'), das aus mindestens einer eingeprägte Abstandshalter (4, 5) aufweisenden Faserschicht (3) gebildet ist. Um eine entsprechende Bodenverkleidung zu schaffen, die bei guter schallisolierender Wirkung ein relativ geringes Gewicht aufweist und kostengünstig herstellbar ist, ist erfindungsgemäß vorgesehen, dass die Abstandshalter (4, 5) rinnenförmig ausgebildete Abstandshalter sind oder umfassen, und dass mindestens zwei rinnenförmige, im wesentlichen parallel zueinander verlaufende Abstandshalter (4) durch mindestens einen dazu querverlaufenden rinnenförmigen Abstandshalter (5) verbunden sind.

## Beschreibung

Die Erfindung betrifft eine schallisolierende Bodenverkleidung für den Innenraum von Kraftfahrzeugen mit einer textilen Dekorschicht, insbesondere Teppichschicht, und mindestens einem unterhalb der Dekorschicht angeordneten Formteil, das aus mindestens einer eingeprägte Abstandshalter aufweisenden Faserschicht gebildet ist.

Derartige Verkleidungen sind bekannt (siehe z.B. DE 199 36 770 Al) Sie werden in Kraftfahrzeugen zur Auskleidung des Fahrgastraumes und des Kofferraumes eingesetzt und müssen dabei ein Reihe von Anforderungen erfüllen. Zunächst müssen sie optisch ansprechend gestaltet sein, da die komfortable Innenraumgestaltung von Kraftfahrzeugen heutzutage ein wichtiges Kaufkriterium darstellt. Des weiteren sollen sie den im Fahrgastraum wahrnehmbaren Geräuschpegel verringern und damit ebenfalls zu einem hohen Fahrkomfort beitragen. Darüber hinaus müssen sie zur Anpassung an die Kontur des Bodenblechs des Kraftfahrzeuges eine entsprechende dreidimensional Form besitzen. Ferner müssen sie gegebenenfalls Funktionselenente wie z.B. elektrische Komponenten oder Luftführungskanäle aufnehmen.

Schallisolierende Bodenverkleidungen in Kraftfahrzeugen sind meist als Feder-Masse-System ausgebildet, bei dem ein elastischer Unterbau aus Weichschaum eine Federwirkung ausübt und die Dekor- bzw. Teppichschicht als Masse wirkt. Durch eine zusätzliche Schwerschicht wird die Masse üblicherweise noch erhöht. Der federelastische Unterbau derartiger Bodenverkleidungen dient dabei häufig auch dem Ausgleich von Unebenheiten im Bodenblech des Kraftfahrzeuges.

Nachteilig bei bekannten Bodenverkleidungen dieser Art ist ihr relativ hohes Gewicht, das den Kraftstoffverbrauch negativ beeinflusst. Ferner sind herkömmliche als Feder-Masse-System aufgebaute Bodenverkleidungen relativ teuer.

Der vorliegenden Erfindung liegt die Aufgabe zugrunde, eine dekorative Bodenverkleidung für den Innenraum von Kraftfahrzeugen zu schaffen, die bei guter schallisolierender Wirkung ein relativ geringes Gewicht aufweist und kostengünstig herstellbar ist.

Diese Aufgabe wird erfindungsgemäß durch die im Anspruch 1 angegebenen Merkmale gelöst.

Die erfindungsgemäße Bodenverkleidung ist aus einer textilen Dekorschicht, insbesondere Teppichschicht, und mindestens einem unterhalb der Dekorschicht angeordneten Formteil aufgebaut. Das Formteil besteht aus mindestens einer Faserschicht, die eingeprägte Abstandshalter aufweist. Die Abstandshalter sind rinnenförmig ausgebildet, wobei mindestens zwei im wesentlichen parallel zueinander verlaufende Abstandshalter durch mindestens einen quer dazu verlaufenden rinnenförmigen Abstandshalter verbunden sind.

Bei der erfindungsgemäßen Bodenverkleidung ist der Weichschaum einer herkömmlichen Bodenverkleidung für den Innenraum von Kraftfahrzeugen, welcher üblicherweise ein Polyurethanschaum ist, teilweise oder vollständig durch das bzw. die die Abstandshalter aufweisenden Formteile ersetzt. Die Faserschichten des Formteils bestehen dabei vorzugsweise aus Polyesterfasern, insbesondere aus einem Gemisch aus Polyesterfasern, Bikomponenten-Schmelzfasern und/oder Copolyester-Vollprofil-Schmelzfasern. Das geprägte Formteil der erfindungsgemäßen Bodenverkleidung lässt sich grundsätzlich kostengünstiger als eine herkömmliche, das gleiche Raumvolumen einnehmende Weichschaumschicht herstellen. In jedem Fall ermöglicht das Formteil eine zumindest partielle Einsparung von Weichschaum, insbesondere von Polyurethanschaum bei der Herstellung gattungsgemäßer Bodenverkleidungen, so dass eine erfindungsgemäße Bodenverkleidung insgesamt geringere Materialkosten erfordert. Zudem führt die Einsparung bzw. der Ersatz von Weichschaum durch das geprägte Formteil zu einer Gewichtsreduzierung bei einer gattungsgemäßen Bodenverkleidung.

Das Formteil der erfindungsgemäßen Bodenverkleidung dient insbesondere dem Ausgleich von Unebenheiten des zu verkleidenden Bodenblechs des Kraftfahrzeuges. Für einen optimalen Ausgleich der Unebenheiten ist es gegebenenfalls zweckmäßig, wenn die rinnenförmigen Abstandshalter des Formteils unterschiedlich tief ausgeprägt sind.

Eine weitere bevorzugte Ausgestaltung der erfindungsgemäßen Bodenverkleidung besteht darin, dass die im wesentlichen parallel zueinander verlaufenden Abstandshalter des Formteils tiefer ausgeprägt sind als der bzw. die dazu quer verlaufenden rinnenförmigen Abstandshalter. Auf diese Weise lässt sich zwischen zwei parallel zueinander verlaufenden Abstandshaltern ein Kanal zur Durchleitung von Kabeln, Schlauchleitungen oder dergleichen realisieren, wobei die Kabel bzw. Leitungen ungehindert unterhalb des querverlaufenden rinnenförmigen Abstandshalters, diesen kreuzend verlegt werden können, da letzterer nicht auf dem Bodenblech aufliegt und somit einen Durchlass für Kabel bzw. Leitungen freilässt.

Die Stabilität bzw. Trittfestigkeit der erfindungsgemäßen Bodenverkleidung lässt sich im Bereich des jeweiligen Formteils einstellen, indem die im wesentlichen parallel zueinander verlaufenden Abstandshalter und/oder die quer dazu verlaufenden rinnenförmigen Abstandshalter in unterschiedlichen Abständen zueinander angeordnet und/oder örtlich unterschiedlich groß ausgeprägt werden. Dort, wo eine hohe Trittfestigkeit gewünscht ist, wird die Trittfestigkeit durch eine Verkleinerung der Abstände der Abstandshalter zueinander und/oder durch eine Verringerung der Prägetiefe der Abstandshalter bei gleichbleibender oder sogar verbesserter akustischer Wirkung erhöht.

Nach einer weiteren vorteilhaften Ausgestaltung ist vorgesehen, dass in den Abstandshaltern mindestens eine Ausnehmung zur Fixierung eines Kabels und/oder einer Schlauchleitung eingeprägt ist, wobei die Ausnehmung mindestens einen Hinterschnitt aufweist.

Weitere bevorzugte und vorteilhafte Ausgestaltungen der erfindungsgemäßen Bodenverkleidung sind in den Unteransprüchen angegeben.

Nachfolgend wird die Erfindung anhand einer mehrere Ausführungsbeispiele darstellenden Zeichnung näher erläutert. Es zeigen in schematischer Darstellung:
- Fig. 1: ein Formteil einer erfindungsgemäßen Bodenverkleidung in Seitenansicht;
- Fig. 2: ein Formteil einer erfindungsgemäßen schalldämpfenden Bodenverkleidung in perspektivischer Schnittansicht;
- Figuren 3 bis 6,: jeweils in Schnittansicht, ein Formwerkzeug zur Herstellung einer erfindungsgemäßen Bodenverkleidung in verschiedenen Arbeitsphasen;
- Fig. 7: eine weitere Ausführungsform einer erfindungsgemäßen Bodenverkleidung in Schnittansicht;
- Fig. 8: eine Variante eines Formteils einer erfindungsgemäßen Bodenverkleidung in Seitenansicht;
- Fig. 9: in perspektivischer Schnittansicht eine weitere Variante einer erfindungsgemäßen Bodenverkleidung mit einer hinterschnittenen Ausnehmung zur Fixierung eines Kabels oder dergleichen am Formteil; und
- Fig. 10: eine weitere Variante einer erfindungsgemäßen Bodenverkleidung in perspektivischer Schnittansicht und nur teilweise dargestellter Dekorschicht.

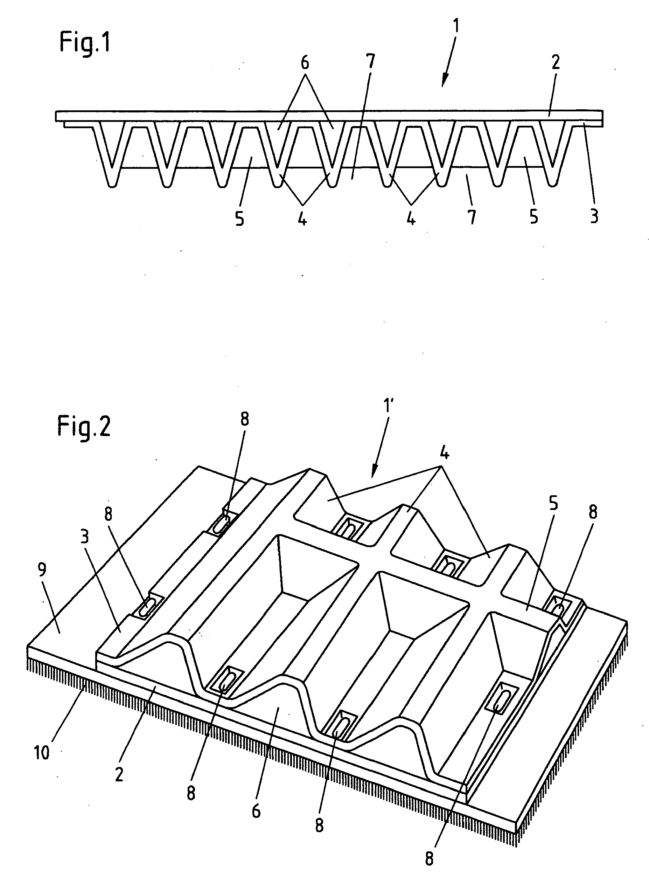

In Fig. 1 ist ein Formteil 1 einer erfindungsgemäßen Bodenverkleidung dargestellt. Das Formteil 1 ist aus zwei miteinander verbundenen Faserschichten 2, 3 gebildet. Während die obere Faserschicht 2 im wesentlichen eben ausgebildet ist, weist die untere Faserschicht 3 durch Prägen (thermisches Umformen) erzeugte Abstandshalter 4, 5 auf.

Die Abstandshalter sind rinnenförmig ausgebildet, wobei jeweils zwei im wesentlichen parallel zueinander verlaufende Abstandshalter 4 durch mindestens einen dazu querverlaufenden rinnenförmigen Abstandshalter 5 verbunden sind .(vgl. Fig. 2). Die Abstandshalter 4, 5 sind im Querschnitt betrachtet im wesentlichen V-förmig ausgeprägt. Sie bilden einen gemeinsamen Hohlraum 6. Bei dieser Ausführungsform des Formteils 1 sind die Abstandshalter 4, 5 nur in einer der Faserschichten, nämlich in der Faserschicht 3 ausgeprägt. Die Ausbildung des bezüglich der parallelen Abstandshalter 4 querverlaufenden Abstandshalters 5 verleiht dem Formteil 1 eine relativ hohe Querschubsteifigkeit.

Bei den Faserschichten 2, 3 handelt es sich um Nadelvliese, die vorzugsweise aus Polyesterfasern bestehen und jeweils ein Flächengewicht im Bereich von 650 bis 1200 g/m², vorzugsweise im Bereich von 650 bis 1000 g/m² besitzen. Vorteilhaft hinsichtlich der Formbeständigkeit der Abstandshalter 4, 5 sowie der Verbindung der Faserschichten 2, 3 miteinander sowie mit einer Dekorschicht ist die Verwendung von Nadelvliesen, die aus einem Gemisch aus Polyesterfasern und Bikomponenten-Schmelzfasern und/oder einem Gemisch aus Polyesterfasern und Copolyester-Vollprofil-Schmelzfasern bestehen. Die Faserschichten 2, 3 können miteinander insbesondere verschweißt sein.

Bei dem in Fig. 1 dargestellten Ausführungsbeispiel ist zu erkennen, dass die im wesentlichen parallel zueinander verlaufenden Abstandshalter 4 tiefer ausgeprägt sind als der quer dazu verlaufende, sie verbindende rinnenförmige Abstandshalter 5. Zwei parallel zueinander verlaufende Abstandshalter 4 und der dazwischen quer verlaufende Abstandshalter 5 begrenzen somit einen Durchlass 7, der die Anordnung eines Kabels, einer Schlauchleitung oder dergleichen zwischen den beiden parallel zueinander verlaufenden Abstandshaltern 4 gestattet.

Fig. 2 zeigt eine Ausführungsform des Formteils, bei der die im wesentlichen parallel zueinander verlaufenden Abstandshalter 4 und der dazu querverlaufende, sie verbindende rinnenförmige Abstandshalter 5 im wesentlichen gleich tief ausgeprägt sind. Die Abstandshalter 4, 5 bilden wiederum einen gemeinsamen Hohlraum 6. Die Faserschichten (Nadelvliese) 2, 3 sind durch mehrere Schweißstellen 8 miteinander und mit dem Rücken 9 einer Dekorschicht 10 verbunden. Die abstandshalterfreie Faserschicht 2 ist hier der Dekorschicht 10 zugewandt und mit deren Rücken 9 verbunden. Das Formteil 1' deckt dabei eine ausgewählte Teilfläche des Rückens 9 der Dekorschicht 10 ab.

Als Dekorschicht 10 kann beispielsweise ein Nadelfilz verwendet werden. Vorzugsweise besteht die Dekorschicht 10 aber aus einem Schlingen-, Velours- oder Diloursteppich. Der Rücken 9 der Dekorschicht 10 kann beispielsweise aus einer Schwerschicht, insbesondere einer Schwerfolie bestehen. Die Schwerschicht verbessert die Formstabilität sowie die Schalldämmwirkung der Bodenverkleidung.

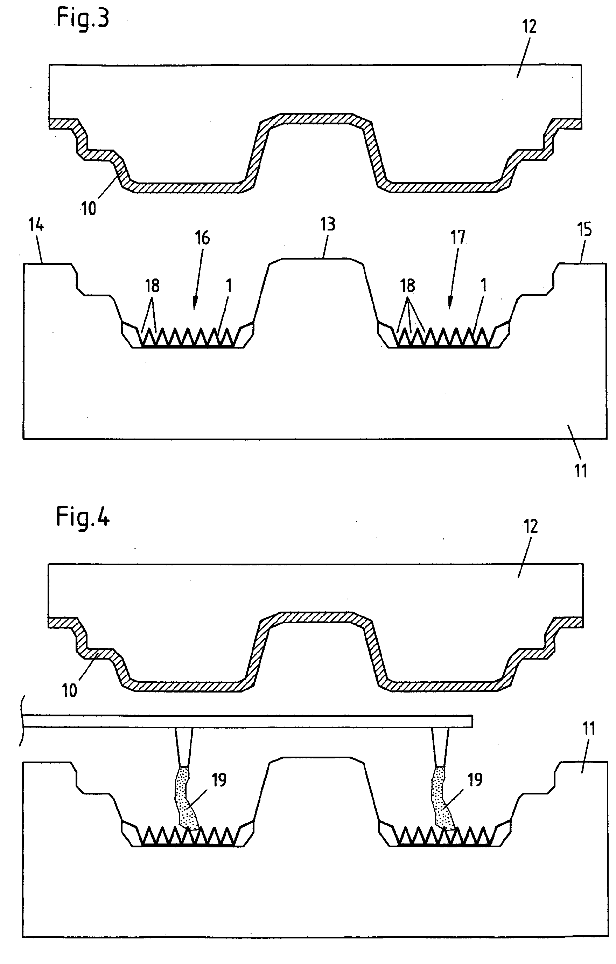

In den Figuren 3 bis 6 sind verschiedene Arbeitsschritte in der Herstellung einer erfindungsgemäßen Bodenverkleidung schematisch dargestellt. Die Herstellung erfolgt mittels eines Formwerkzeuges, das eine untere Werkzeughälfte (Unterwerkzeug) 11 und eine dazu komplementär ausgebildete obere Werkzeughälfte (Oberwerkzeug) 12 aufweist. Das Unterwerkzeug 11 entspricht der Kontur eines Bodenblechs eines Kraftfahrzeuges, wobei der mittlere Werkzeugbereich 13 der Form eines Getriebetunnels und die seitlichen, abgestuften Werkzeugbereiche 14, 15 den Türschwellenbereichen nachgebildet sind. Das Bodenblech des betreffenden Kraftfahrzeuges bzw. das Unterwerkzeug 11 weist in diesem Ausführungsbeispiel somit zwei wannenförmige Vertiefungen 16, 17 auf.

An der Unterseite des Oberwerkzeuges 12 ist eine vorgeformte Dekorschicht 10, beispielsweise eine Veloursteppichschicht gehalten. Das Oberwerkzeug 12 kann hierzu mit einer taktweise arbeitenden Saugvorrichtung (nicht gezeigt) gekoppelt sein, wobei die Unterseite des Oberwerkzeuges 12 mit einer Vielzahl kleiner Öffnungen (nicht gezeigt) versehen ist, die über Kanäle an einem Sauggebläse oder dergleichen angeschlossen sind.

In die wannenförmigen Vertiefungen 16, 17 des Unterwerkzeuges 11 werden hohle Formteile 1 eingelegt, die dem Formteil (Prägeteil) gemäß Fig. 1 oder Fig. 2 entsprechen. Es ist zu erkennen, dass die Formteile 1 jeweils mit der im wesentlichen ebenen bzw. ungeprägten Faserschicht 2 untenliegend in die Vertiefungen 16, 17 eingelegt werden, so dass die offenen Rinnen 18 (Kammern) des Formteils 1, welche durch die rinnenförmigen Abstandshalter 4, 5 definiert sind, nach oben weisen.

Nachdem die Formteile (Prägeteile) 1 in das Unterwerkzeug 11 - wie in Fig. 3 gezeigt - eingelegt sind, wird in die Vertiefungen 16, 17 des Unterwerkzeuges 11 Polyurethan-Kaltschaum 19 eingefüllt. Der Polyurethan-Kaltschaum 19 wird bei diesem Ausführungsbeispiel also auf die die Abstandshalter 4, 4 aufweisende Faserschicht 3 appliziert.

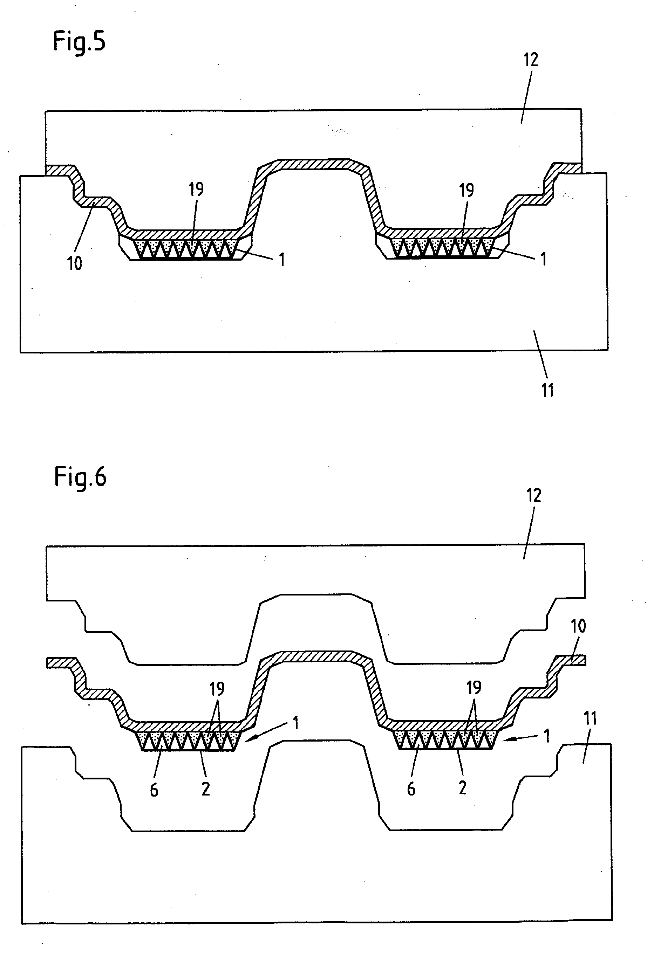

Anschließend wird das Formwerkzeug geschlossen, wodurch der Polyurethan-Kaltschaum 19 in den Rinnen 18 der Formteile 1 automatisch verteilt wird (siehe Fig. 5). Wird ein hohles Formteil 1 gemäß Fig. 1 als Einleger verwendet, so stellen die von den querverlaufenden Abstandshaltern 5 freigelassenen Durchlässe 7 eine Verbindung der ausgeprägten Rinnen 18 (Kammern) untereinander sicher, so dass beim Schließen des Formwerkzeuges Polyurethan-Kaltschaum 19 von einer Rinne in eine benachbarte, mit ihr fluchtende, noch nicht oder nur teilweise gefüllte Rinne überströmen kann und so eine im wesentlichen vollständige Ausschäumung aller Rinnen erreichbar ist. Vorzugsweise können auch in den parallel zueinander verlaufenden Abstandshaltern 4 muldenförmige Durchlässe ausgeprägt sein, um ein vollständiges bzw. gleichmäßiges Ausschäumen der Rinnen durch Überströmen von Kaltschaum 19 aus einer Rinne 18 in eine dazu benachbarte, parallel verlaufende Rinne 18 zu erleichtern.

Das Formwerkzeug bleibt für eine bestimmte Zeitdauer geschlossen, die der Reaktionszeit des Polyurethan-Kaltschaums 19 entspricht. Während dieser Zeit härtet der Polyurethan-Kaltschaum 19 soweit aus, dass sich eine ausreichend feste stoffschlüssige Verbindung zwischen dem hohlen Formteil (Einleger) 1 und dem Schaumstoff 19 sowie dem Rücken 9 der Dekorschicht 10 ergibt.

Das Formwerkzeug wird sodann geöffnet und die fertige Bodenverkleidung aus dem Formwerkzeug entnommen (vgl. Fig. 6). Auf diese Weise erhält man eine schallisolierende, insbesondere schalldämpfende Bodenverkleidung, deren Abstandshalter aufweisende Faserschicht 3 zwischen der anderen Faserschicht 2 und der Dekorschicht 10 angeordnet und mit letzterer durch eine Schaumstoffschicht verbunden ist. Das jeweilige aus Faserschichten 2, 3 gebildete Formteil (Prägeteil) 1 ist dabei unter einer ausgewählten Teilfläche der Dekorschicht 10 angeordnet und übernimmt insbesondere eine Ausgleichsfunktion zwischen der Dekorschicht 10 und dem Bodenblech des betreffenden Kraftfahrzeuges.

Bei der Herstellung herkömmlicher gattungsgemäßer Bodenverkleidungen, deren Dekorschicht mit Polyurethan-Kaltschaum hinterschäumt wird, wird das Unterwerkzeug vorab mit einem Trennmittel zur Erleichterung der Entnahme der Bodenverkleidung besprüht. Der Einsatz von Trennmittel verursacht jedoch erhebliche Zusatzkosten und kann gegebenenfalls auch zur Verunreinigung anderer Anlagenteile führen. Bei der Herstellung einer erfindungsgemäßen Bodenverkleidung mit partieller Polyurethan-Kaltschaumschicht 19 kann dagegen auf den Einsatz von Trennmitteln ganz oder zumindest weitgehend verzichtet werden, wenn durch das Formteil 1 als Einleger im Formwerkzeug ein Kontakt des Polyurethan-Kaltschaumes 19 mit dem Formwerkzeug verhindert wird.

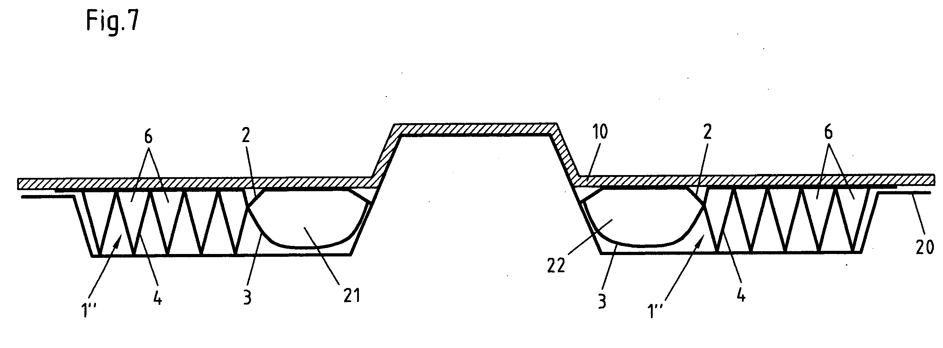

In Fig. 7 ist ein weiteres Ausführungsbeispiel einer erfindungsgemäßen schallisolierenden Bodenverkleidung gezeigt, wobei mit dem Bezugszeichen 20 ein schematisch dargestelltes Bodenblech eines Kraftfahrzeuges bezeichnet ist. Das Formteil 1" dieser Bodenverkleidung unterscheidet sich von den in den Figuren 1 und 2 dargestellten Formteilen 1, 1' durch die Integration von Luftführungskanälen 21 und/oder Kabelkanälen 22 aufweist, die durch thermisches Umformen mindestens einer der Faserschichten 2, 3 erzeugt sind.

Andererseits ist es bei den in den Figuren 1 und 2 dargestellten Formteilen 1, 1' grundsätzlich aber auch möglich, den aus mehreren, jeweils einen kleineren Querschnitt aufweisenden Kanälen bestehenden Hohlraum 6 zwischen den Faserschichten 2, 3 zur Durchleitung von Luft, Kabeln und/oder Schlauchleitungen zu nutzen.

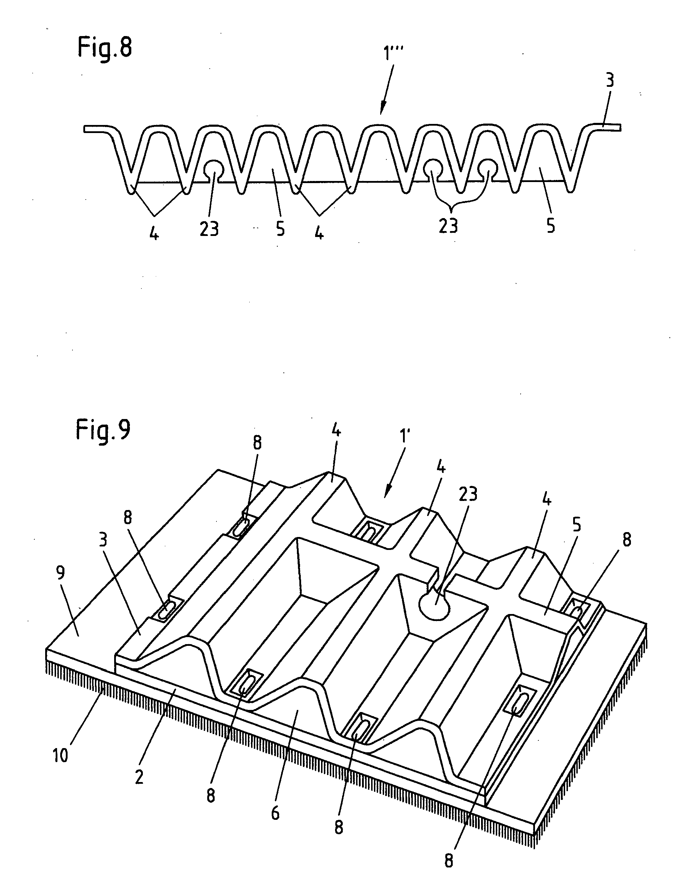

Fig. 8 zeigt eine Variante, bei der das Formteil 1' ' ' der erfindungsgemäßen Bodenverkleidung nur aus einer einzelnen Faserschicht 3 gebildet ist. Die dreidimensional geprägte Faserschicht 3 entspricht hinsichtlich ihres Materials den Faserschichten 2, 3 der Ausführungsbeispiele gemäß den Figuren 1 und 2. Die in der Faserschicht 3 gemäß Fig. 8 ausgeprägten Abstandshalter 4, 5 sind wiederum rinnenförmig ausgebildet, wobei jeweils zwei im wesentlichen parallel zueinander verlaufende Abstandshalter 4 durch mindestens einen quer dazu verlaufenden rinnenförmigen Abstandshalter 5 verbunden sind.

In den Abstandshaltern 4, 5 des Formteils 1' ' ' gemäß Fig. 8 sind mehrere hinterschnittene Ausnehmungen 23 zur Fixierung von Kabeln und/oder Schlauchleitungen (nicht gezeigt) integriert. Die Verengung der jeweiligen Ausnehmung 23 lässt sich elastisch aufweiten und umgreift ein darin eingedrücktes Kabel oder dergleichen.

Zur Verbindung von Formteilen 1' ' ' gemäß Fig. 8 mit einer Dekor- bzw. Teppichschicht 10 kann ebenfalls das in den Figuren 3 bis 6 schematisch dargestellte Formwerkzeug 11, 12 verwendet werden. Die Formteile werden dabei in die wannenförmigen Vertiefungen 16, 17 des Formwerkzeuges eingelegt, wobei die Ausnehmungen 23 zur Fixierung von Kabeln und/oder Schlauchleitungen nach unten weisen. Auf die profilierte Oberseite der eingelegten Formteilen 1' ' ' wird sodann Polyurethan-Kaltschaum 19 aufgebracht. Anschließend wird das Formwerkzeug geschlossen, sodass die am Oberwerkzeug 12 gehaltene Teppichschicht (Dekorschicht) 10 mit dem Kaltschaum 19 in Kontakt gelangt. Der Rücken der Teppichschicht (Dekorschicht) 10 umfasst vorzugsweise eine schaumundurchlässige Sperr- oder Schwerfolie und/oder eine Vliesschicht, wobei letztere vorzugsweise relativ steif ausgebildet ist. Die Unterseite der Formteile 1' ' ' wird nicht hinterschäumt. Nach Ablauf einer bestimmten Reaktionszeit des Polyurethan-Kaltschaums 19 wird das Formwerkzeug wieder geöffnet und die Bodenverkleidung als Fertigteil entnommen (vgl. Figuren 3 bis 6) .

In Fig. 9 ist eine Variante der Bodenverkleidung gemäß Fig. 2 zu sehen. Entsprechend dem in Fig. 8 dargestellten Formteil 1' ' ' weist der querverlaufende Abstandshaltern 5 eine eingeprägte, hinterschnittene Ausnehmung 23 zur Fixierung eines Kabels oder einer Schlauchleitung auf.

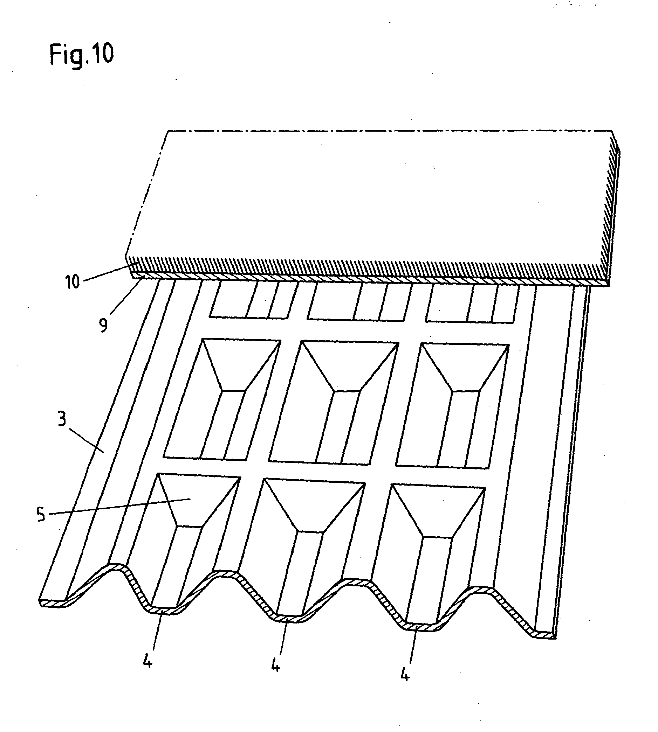

Fig. 10 veranschaulicht ein weiteres Ausführungsbeispiel der erfindungsgemäßen Bodenverkleidung. Im Unterschied zu dem Ausführungsbeispiel gemäß Fig. 2 ist hier die untere Faserschicht 3, in welcher die Abstandshalter 4, 5 ausgebildet sind, umgedreht angeordnet. Die Verbindung der Faserschicht 3 mit dem Rücken 9 der Dekor- oder Teppichschicht 10 ist vorzugsweise durch partielle Verschweißung oder Verklebung realisiert.

Die Erfindung ist in ihrer Ausführung nicht auf die vorstehend beschriebenen Ausführungsbeispiele beschränkt. Vielmehr sind durchaus Varianten denkbar, die auch bei abweichender Gestaltung von der in den Ansprüchen definierten Erfindung Gebrauch machen.

## Patentansprüche

1. Bodenverkleidung für den Innenraum von Kraftfahrzeugen mit einer textilen Dekorschicht (10), insbesondere Teppichschicht, und mindestens einem unterhalb der Dekorschicht angeordneten Formteil (1, 1', 1", 1"'), das aus mindestens einer eingeprägte Abstandshalter (4, 5) aufweisenden Faserschicht (3) gebildet ist,
**dadurch gekennzeichnet, dass**
die Abstandshalter (4, 5) rinnenförmig ausgebildete Abstandshalter sind oder umfassen, wobei mindestens zwei rinnenförmige, im wesentlichen parallel zueinander verlaufende Abstandshalter (4) durch mindestens einen dazu querverlaufenden rinnenförmigen Abstandshalter (5) verbunden sind.

2. Bodenverkleidung nach Anspruch 1,
**dadurch gekennzeichnet, dass**
die rinnenförmigen Abstandshalter (4, 5) im Querschnitt im wesentlichen V-förmig ausgeprägt sind.

3. Bodenverkleidung nach Anspruch 1 oder 2,
**dadurch gekennzeichnet, dass**
das Formteil (1, 1', 1") aus mindestens zwei miteinander verbundenen Faserschichten (2, 3) gebildet ist, wobei die Abstandshalter (4, 5) in mindestens einer (3) der Faserschichten eingeprägt sind, und wobei die Faserschichten (2, 3) einen Hohlraum des Formteils begrenzen.

4. Bodenverkleidung nach Anspruch 3,
**dadurch gekennzeichnet, dass**
die Abstandshalter (4, 5) nur in einer (3) der Faserschichten eingeprägt sind.

5. Bodenverkleidung nach Anspruch 4,
**dadurch gekennzeichnet, dass**
die die Abstandshalter (4, 5) aufweisende Faserschicht (3) zwischen der anderen Faserschicht (2) des Formteils (1') und der Dekorschicht (10) angeordnet und mit letzterer durch eine Schaumstoffschicht (19) verbunden ist.

6. Bodenverkleidung nach Anspruch 5,
**dadurch gekennzeichnet, dass**
die Schaumstoffschicht (19) aus Polyurethan-Kaltschaum gebildet ist.

7. Bodenverkleidung nach einem der Ansprüche 1 bis 3,
**dadurch gekennzeichnet, dass**
das Formteil (1, 1") eine abstandshalterfreie Faserschicht (2) aufweist, die der Dekorschicht (10) zugewandt und mit dieser verbunden ist.

8. Bodenverkleidung nach einem der Ansprüche 1 bis 7,
**dadurch gekennzeichnet, dass**
die Faserschicht (3) oder die Faserschichten (2, 3) aus Polyesterfasern bestehen.

9. Bodenverkleidung nach einem der Ansprüche 1 bis 8,
**dadurch gekennzeichnet, dass**
die Faserschicht (3) oder die Faserschichten (2, 3) aus einem Gemisch aus Polyesterfasern, Bikomponenten-Schmelzfasern und/oder Copolyester-Vollprofil-Schmelzfasern bestehen.

10. Bodenverkleidung nach einem der Ansprüche 1 bis 9,
**dadurch gekennzeichnet, dass**
die Faserschicht (3) oder die Faserschichten (2, 3) jeweils ein Flächengewicht im Bereich von 650 bis 1200 g/m², vorzugsweise im Bereich von 650 bis 1000 g/m² aufweisen.

11. Bodenverkleidung nach einem der Ansprüche 1 bis 10,
**dadurch gekennzeichnet, dass**
das Formteil (1") mindestens einen Luftführungskanal (21) und/oder einen Kabelkanal (22) aufweist, der/die durch thermisches Umformen mindestens einer der Faserschichten (2, 3) erzeugt ist/sind.

12. Bodenverkleidung nach einem der Ansprüche 1 bis 11,
**dadurch gekennzeichnet, dass**
die rinnenförmigen Abstandshalter (4, 5) unterschiedlich tief ausgeprägt sind.

13. Bodenverkleidung nach einem der Ansprüche 1 bis 12,
**dadurch gekennzeichnet, dass**
die im wesentlichen parallel zueinander verlaufenden Abstandshalter (4) tiefer ausgeprägt sind als der oder die quer dazu verlaufenden rinnenförmigen Abstandshalter (5).

14. Bodenverkleidung nach einem der Ansprüche 1 bis 13,
**dadurch gekennzeichnet, dass**
die im wesentlichen parallel zueinander verlaufenden Abstandshalter (4) und/oder die quer dazu verlaufenden rinnenförmigen Abstandshalter (5) in unterschiedlichen Abständen zueinander und/oder örtlich unterschiedlich groß ausgeprägt sind.

15. Bodenverkleidung nach einem der Ansprüche 1 bis 14,
**dadurch gekennzeichnet, dass**
das Formteil (1, 1', 1") an einer ausgewählten Teilfläche der Rückseite der Dekorschicht (10) angeordnet ist.

16. Bodenverkleidung nach einem der Ansprüche 1 bis 15,
**dadurch gekennzeichnet, dass**
die Dekorschicht (10) mit einer Schwerschicht und/oder einer steifen Vliesschicht als Rücken (9) versehen ist.

17. Bodenverkleidung nach einem der Ansprüche 1 bis 16,
**dadurch gekennzeichnet, dass**
in den Abstandshaltern (4, 5) mindestens eine hinterschnittene Ausnehmung (23) zur Fixierung eines Kabels und/oder einer Schlauchleitung eingeprägt ist.
